# EUROPÄISCHE PATENTSCHRIFT

(11) **EP 0 481 576 B1**
(45) Veröffentlichungstag und Bekanntmachung des Hinweises auf die Patenterteilung: **08.06.1994**
(21) Anmeldenummer: 91250280.4
(22) Anmeldetag: 11.10.1991
(51) Int. Cl.: C25D 17/00, C02F 1/46

(54) **Membranelektrolysemodul**
Membrane electrolytic cell
Cellule d'électrolyse à membrane

(30) Priorität: 13.10.1990 DE 4032856
(43) Veröffentlichungstag der Anmeldung: 22.04.1992
(73) Patentinhaber: ATOTECH Deutschland GmbH, 10553 Berlin (DE)
(72) Erfinder: Bläsing, Horst, W-1000 Berlin 13 (DE)
(74) Vertreter: Effert, Udo, Dipl.-Ing.

(56) Entgegenhaltungen:
- DE-C- 3 640 020
- PATENT ABSTRACTS OF JAPAN vol. 12, no. 438 (C-544)(3285) 17. November 1988 & JP-A-63 162 897 ( NISSO KINZOKU KAGAKU KK ) 6. Juli 1988
- PATENT ABSTRACTS OF JAPAN vol. 12, no. 438 (C-544)(3285) 17. November 1988 & JP-A-63 162 896 ( NISSO KINZOKU KAGAKU KK ) 6. Juli 1988

## Beschreibung

Die Erfindung betrifft einen Membranelektrolysemodul, der in Membranelektrolysezellen für die unterschiedlichsten Anwendungsfälle einsetzbar ist, so zum Beispiel bei der Erzeugung galvanischer Überzüge, bei der elektrolytischen Regenerierung von galvanischen Bädern oder Chromsäurebädern, bei der elektrolytischen Abwasserreinigung.

Als Membranelektrolyse sind im Rahmen dieser Erfindung alle elektrolytischen Prozesse unter Einsatz von Membranen zu verstehen. Die Membranen erfüllen zum einen die Aufgabe der Fernhaltung unerwünschter Verbindungen von der Gegenelektrode. Zum anderen sollen sie - im Interesse einer ausgeglichenen Stoffbilanz der Zelle - nur für eine Ionensorte durchlässig sein. Da Ionenaustauschermembranen diesen Anforderungen am besten gerecht werden, haben sie breite Anwendung in der Membranelektrolyse gefunden. In US-PS 4.778.572 wird zum Beispiel für das Elektroplattieren unter Zugabe organischer Glanzbildner eine konstruktive Lösung aufgezeigt ("Membrantasche"), bei der eine Kationenaustauschermembrane den Anodenraum flüssigkeitsdicht von der Prozeßlösung trennt, um zu verhindern, daß die organischen Zusätze zur Anode gelangen und dort unerwünschte Nebenreaktionen eingehen. Hierbei ist allerdings eine Ablagerung der organischen Zusätze auf der Membranoberfläche und damit eine relativ begrenzte Einsetzbarkeit der Membrane zu erwarten.

Bei der Membranelektrolyse ist es für die Funktionssicherheit der Membranen und damit für die Leistung und Standzeit solcher Systeme von entscheidender Bedeutung, daß eine Belegung der Membranoberfläche mit Reaktionsprodukten oder Zusätzen aus der Prozeßlösung vermieden wird. Es ist bekannt, daß bei der Elektrodialyse Verschmutzungen der Ionenaustauschermembranen durch große organische Ionen, durch pH-sensitive Salze (z.B. CaCO₃ an der Anionenaustauschermembrane) oder durch Hydroxyde (an der Kationenaustauschermembrane) auftreten können. Ursache dafür sind Polarisationserscheinungen an der Membranoberfläche, die bei ungenügender Konvektion im Elektrolyten zu verzeichnen sind. Um eine gute Konvektion im Elektrolyten zu erreichen, wird z.B. im "Hitachi Elektrodialyzer", bei dem alternierend aufeinander in planparalleler Anordnung die Elektrodenplatten, die Elektrolyträume und die Ionenaustauschermembranen angebracht sind, über spezielle Verteiler Luft in die Elektrolyträume eingeleitet (Thomas A. Davis "Electrodialysis", Outline for Lectures at the Center for Professional Advancement). Es wird jedoch auch hier keine optimale Strömung an den Membranoberflächen erreicht, da die Luft in das Elektrolytinnere vordringt. Das Elektrolytinnere ist besser durchmischt als die Grenzschichten an den Membranen.

Optimale Strömungsgeschwindigkeiten, die sich z.B. in der Brackwasseraufbereitung bewährt haben, liegen zwischen 0,2 - 0,5 m/s. Sie werden bisher lediglich in geschlossenen Systemen (Membranstapel) mit Hilfe von Pumpenkreisläufen erreicht.

Die Aufgabe der Erfindung besteht demgegenüber darin, eine konstruktive Lösung zur Gewährleistung einer ausreichend guten Strömung an den Membranoberflächen während des gesamten Elektrolysevorganges zu finden, die weniger aufwendig als ein Pumpenkreislauf, konstruktiv einfach, billig und sowohl im Labor als auch im technischen Maßstab problemlos zu verwirklichen ist sowie zu keiner Beeinflussung des elektrischen Feldes führt. Diese konstruktive Lösung soll universell in Membranelektrolysezellen einsetzbar sein.

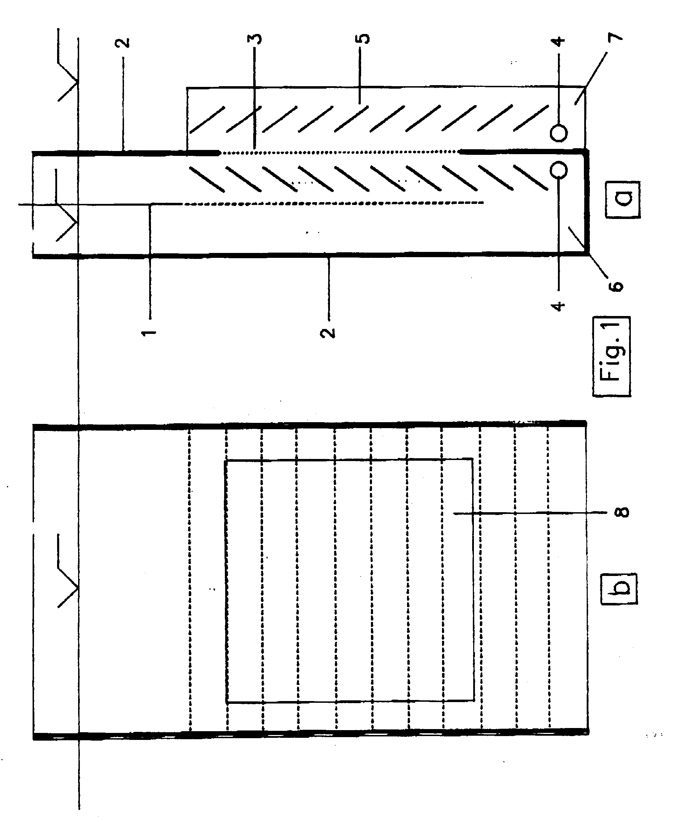

Die Aufgabe der Erfindung wird - ausgehend vom Oberbegriff des 1. Patentanspruches - gemäß den Merkmalen im kennzeichnenden Teil gelöst. Die Merkmale des 1. Anspruches sind unter Hinzuziehung von Fig. 1 auszulegen, die den erfindungsgemäßen Membranelektrolysemodul mit an den Membranoberflächen angebrachten Leitgittern (5) in den Querschnitten a und b zeigt. Gemäß den Ansprüchen 2 und 3 können die Leitgitter (5) beidseitig an der Membranoberfläche sowohl im Elektrodenraum als auch im Prozeßlösungsraum angebracht sein (Fig. 1) oder auch nur einseitig an der Membranoberfläche in einem der Räume positioniert sein.

Im erfindungsgemäßen Membranelektrolysemodul wird durch die eingeblasene Luft und die an der Membranoberfläche angebrachten Leitgitter (5) eine zwangsgeführte Elektrolytbewegung nach dem Mammutpumpenprinzip direkt an der Membranoberfläche und über die gesamte Membranfläche erzeugt.

Gegenstand ist weiter ein Verfahren zur Erzeugung einer an der Membranoberfläche zwangsgeführten Elektrolytbewegung bei der Membranelektrolyse, bei dem ein oder mehrere Membranelektrolysemodule gemäß Anspruch 1 in die Elektrolysezelle integriert werden und während der Elektrolyse durch die Düsen (4) Luft eingeblasen wird.
Da die eingeblasene Luft - bedingt durch die Leitgitter - nur wenig in das Elektrolytinnere vordringen kann, werden an der Membranoberfläche ausreichend gute Strömungsgeschwindigkeiten erreicht, so daß ein Belegen der Membrane mit störenden Reaktionsprodukten vermieden wird.

Es ist für den Fachmann offensichtlich, daß das Material für die Leitgitter so gewählt werden muß, daß es einerseits stromdurchlässig ist und andererseits aber - je nach Anwendungsfall - keine Anoden- oder Kathodenreaktionen eingehen kann. Die Verankerung der Elektrode und der Leitgitter erfolgt mit üblichen konstruktiven Mitteln.

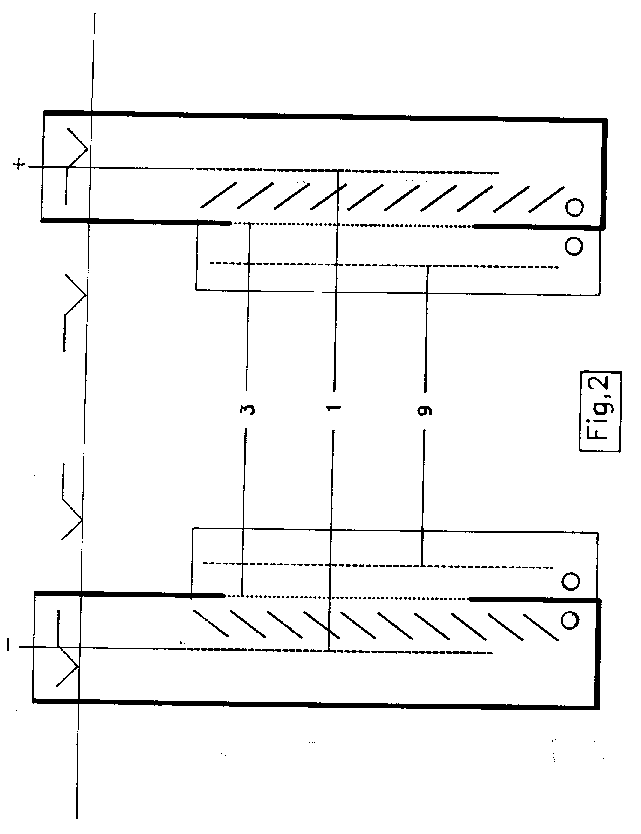

Der erfindungsgemäße Membranelektrolysenmodul ist universell einsetzbar. Er ist in seinen Abmessungen so gestaltbar, daß er in Membranelektrolysezellen jeglicher Größe eingesetzt und ins Elektrodenfeld integriert werden kann. Er kann wahlweise ins Anodenfeld, ins Kathodenfeld oder auch in beide integriert sein. In Fig. 2 ist als Anwendungsbeispiel der Querschnitt einer Membranelektrolysezelle gezeigt, in der der erfindungsgemäße Modul sowohl ins Kathodenfeld als auch ins Anodenfeld integriert ist. Diese Zelle ist z.B. zum Regenerieren von galvanischen Bädern anwendbar.

Der erfindungsgemäße Modul funktioniert für die verschiedensten Anwendungsfälle der Membranelektrolyse, so bei der Erzeugung galvanischer Überzüge, bei der elektrolytischen Regenerierung von galvanischen Bädern oder Chromsäurebädern, bei der elektrolytischen Abwasserreinigung.

In allen Fällen wird ein Belegen der Membranoberfläche mit Reaktionsprodukten vermieden, damit die Funktionssicherheit der Membranen gewährleistet und eine erheblich verlängerte Standzeit der Membranen erreicht.

### Bezugszeichenliste

- Fig. 1 a: 1 - Elektrode
2 - Gehäuse
3 - Ionenaustauschermembrane
4 - Luftdüsen
5 - Leitgitter
6 - Elektrodenraum
7 - Prozeßlösungsraum
- Fig. 1 b: 8 - Membranefenster
- Fig. 2: 1 und 3 - wie in Fig. 1
9 - Diaphragma

## Patentansprüche

1. Membranelektrolysemodul, bestehend aus der Elektrode (1) und dem durch ein Gehäuse (2) eingefaßten Elektrodenraum (6), wobei das Gehäuse als Halterung für eine Ionenaustauschermembrane (3) dient und so der Elektrodenraum durch ein Membranefenster (8) flüssigkeitsdicht vom Prozeßlösungsraum (7) getrennt ist,
dadurch gekennzeichnet,
daß die Ionenaustauschermembrane eine Anionen- oder eine Kationenaustauschermembrane ist, daß unterhalb des Membranefensters über die gesamte Membranbreite sowohl im Elektrodenraum als auch im Prozeßlösungsraum mit Luft gespeiste Düsen (4) angebracht sind und zum Erreichen einer zwangsgeführten, turbulenten Elektrolytbewegung an der Membraneoberfläche stromdurchlässige Leitgitter (5) positioniert sind.

2. Membranelektrolysemodul nach Anspruch 1,
dadurch gekennzeichnet,
daß die Leitgitter (5) beidseitig an der Membranoberfläche sowohl im Elektrodenraum als auch im Prozeßlösungsraum angebracht sind.

3. Membranelektrolysemodul nach Anspruch 1,
dadurch gekennzeichnet,
daß die Leitgitter (5) einseitig an der Membranoberfläche entweder im Elektrodenraum oder im Prozeßlösungsraum angebracht sind.

4. Verwendung des Membranelektrolysemoduls nach mindestens einen der Ansprüche 1-3 zur elektrolytischen Regeneration von galvanischen Bädern oder zur elektrolytischen Reinigung von Abwasser.

## Claims

1. Membrane electrolytic module, comprising the electrode (1) and the electrode chamber (6), which is surrounded by a housing (2), the housing serving as a mounting support for an ion exchanger membrane (3) and, in consequence, the electrode chamber being separated in a fluid-tight manner from the process solution chamber (7) by means of a membrane window (8), characterised in that the ion exchanger membrane is an anion or cation exchanger membrane, in that nozzles (4), which are supplied with air, are provided beneath the membrane window over the entire membrane width both in the electrode chamber and in the process solution chamber, and in that flow-permeable guide lattices (5) are provided on the membrane surface in order to achieve a positively guided, turbulent electrolyte movement.

2. Membrane electrolytic module according to claim 1, characterised in that the guide lattices (5) are provided on both sides of the membrane surface both in the electrode chamber and in the process solution chamber.

3. Membrane electrolytic module according to claim 1, characterised in that the guide lattices (5) are provided on one side of the membrane surface either in the electrode chamber or in the process solution chamber.

4. Use of the membrane electrolytic module according to at least one of claims 1 to 3 for the electrolytic regeneration of electrolytic baths or for the electrolytic purification of waste water.

## Revendications

1. Module d'électrolyse à membrane, constitué de l'électrode (1) et de l'espace pour électrode (6) entouré par un boîtier (2), le boîtier servant de fixation pour une membrane d'échangeur d'ions (3) et l'espace pour électrode étant ainsi séparé d'une manière étanche aux liquides, par une fenêtre (8) à membrane de l'espace pour solution de procédé (7), caractérisé en ce que la membrane d'échangeur d'ions est une membrane d'échangeur d'anions ou de cations, en ce que des buses (4) alimentées en air sont montées en-dessous de la fenêtre à membrane, sur la largeur totale de la membrane, aussi bien dans l'espace pour électrode que dans l'espace pour solution de procédé et en ce que des grilles de guidage (5) perméables aux courants sont positionnées pour obtenir une circulation forcée, turbulente, de l'électrolyte à la surface de la membrane.

2. Module d'électrolyse à membrane selon la revendication 1, caractérisé en ce que les grilles de guidage (5) sont montées des deux côtés, à la surface de la membrane, aussi bien dans l'espace pour électrode, que dans l'espace pour solution de procédé.

3. Module d'électrolyse à membrane selon la revendication 1, caractérisé en ce que les grilles de guidage (5) sont montées d'un seul côté, à la surface de la membrane, soit dans l'espace pour électrode, soit dans l'espace pour solution de procédé.

4. Utilisation du module d'électrolyse à membrane, selon au moins l'une quelconque des revendications 1 à 3, destiné à la régénération électrolytique de bains de galvanisation, ou à l'épuration électrolytique d'eaux usées.
